# EUROPÄISCHE PATENTANMELDUNG

(11) **EP 1 746 145 A2**
(43) Veröffentlichungstag der Anmeldung: **24.01.2007**
(21) Anmeldenummer: 06116044.6
(22) Anmeldetag: 26.06.2006
(51) Int. Cl.: C10J 3/46, C10J 3/62, C10J 3/66, F23G 5/027, F23J 1/00, F23G 7/10, F23G 5/46, F23G 5/50, F23J 15/02, F23L 15/00, F23J 15/00

(54) **Anlage zur Erzeugung von Energie aus brennbarem Abfall**

(30) Priorität: 24.06.2005 AT 10682005
(71) Anmelder: WITO-Waldviertler Innov. Techn. Biomassekraftwerk Errichtungs- und Betriebsgesellschaft m.b.H., 3822 Karlstein an der Thaya (AT)
(72) Erfinder: Friedreich, Franz, Dr., 3822 Karlstein an der Thaya (AT)
(74) Vertreter: Müllner, Erwin

(57) **Zusammenfassung**

Die Anlage weist einen Gasgenerator (100) mit automatischer Entaschung und einen Zyklon (306) auf. Vorzugsweise ist ein Motor (800) vorgesehen, der mit dem im Gasgenerator (100) erzeugten Gas betrieben wird und einen Generator zur Stromerzeugung antreibt. Das erzeugte Gas kann aber auch in einer Therme verwertet werden. Erfindungsgemäß werden die Asche im Gasgenerator (100) und die im Zyklon (306) abgeschiedenen Feststoffe einem Fließbettvergaser (200) zugeführt, dessen Abgase in den Gasgenerator (100) zurückgeführt werden. Dadurch kann auch minderwertiger Brennstoff verwertet werden. Es ist zweckmäßig, für eine Vorwärtsregelung Sensoren (102, 103, 104) für den Brennstoff und für eine Rückkopplung einen Analysator (300) für das entwickelte Pyrolysegas vorzusehen. Um das Pyrolysegas in einem nicht adaptierten Dieselmotor (800) zu verwerten, wird es in einem Mischer (701) mit Luft gemischt und von einem Kompressor (703) eines Abgasturboladersystems (700) in einen Dieselmotor (800) gepresst, der durch Einspritzung von flüssigem Brennstoff gezündet wird.

## Beschreibung

### Technisches Gebiet

Die vorliegende Erfindung betrifft eine Anlage zur Erzeugung von Energie, insbesondere von elektrischer Energie und Wärmeenergie, aus brennbarem Abfall, insbesondere organischer Herkunft, wobei die Anlage einen Gasgenerator mit automatischer Entaschung und einen Zyklon beinhaltet, wobei vorzugsweise ein Motor vorgesehen ist, der mit dem im Gasgenerator erzeugten Gas betrieben wird und einen Generator zur Stromerzeugung antreibt.

### Stand der Technik

Die Vergasung von Holzmasse zur Erzeugung von Gas als Brennstoff ist bekannt. Dieses Gas, als Pyrolysegas bezeichnet, wurde besonders in den Zwanziger- bis Vierzigerjahren des vorigen Jahrhunderts als Brennstoff für modifizierte Diesel- und Benzinmotore verwendet. Als Holzmasse wurde zu diesem Zweck Buchen- und Eichenholz verwendet, mit Wassergehalt bis 18 Masse-%, in Holzschnitzel mit bestimmten Maßen zerkleinert. Dadurch gelang es, die Verschmutzung des Pyrolysegases durch Flüssigkeiten, insbesondere durch Teer und Phenol, zu reduzieren. Trotzdem war dieser Anteil an Teer und Phenol immer noch erheblich, wodurch nicht nur die Motore verunreinigt und die Ventile verstopft wurden, sondern vor allem auch die Umwelt belastet wurde, weil diese flüssigen Verunreinigungen einfach in der Umwelt freigesetzt wurden.

Später kam es zu einem Mangel an hartem Holz, vor allem an Eichen- und Buchenholz. Außerdem entstand ein Bedarf, nicht nur die wesentliche Menge an hartem Agrarabfall zu verarbeiten, sondern auch den Abfall aus der Holzproduktion, wo vor allem Weichholz verwendet wurde. Dieses Weichholz, insbesondere aus Nadelbäumen, Pappeln u.a., beinhaltet durchschnittlich ca. 30 Masse-% Wasser, was den Vergasungsprozess in den bekannten Vergasungsanlagen wesentlich erschwert. Die Vergasung von feuchtem Holzabfall aus Weichholz und auch seine Verbrennung in Kesselräumen hat einen ungünstigen Einfluss auf die Umwelt, weil sich in den Rauchgasen unerwünscht hohe Mengen an Stickoxiden befinden, und es entsteht auch eine größere Menge von Abfallwasser, in dem sich Kohlenwasserstoffe befinden, vor allem Phenol.

Die Verbrennung von Agrarabfällen, z. B. Stroh, ist für die Wärmeproduktion sehr ungünstig, sowohl aus energetischer als auch aus ökologischer Sicht. Solch eine Verbrennung erfordert eine nachfolgende Reinigung der Emissionen, die Phenol enthalten.

Die günstigere Verwertung von Agrarabfall für energetische Zwecke ist die Vergasung dieser Abfälle und nachfolgend die Verbrennung des entstehenden Pyrolysegases, z.B. in einem Brennersystem. Das ermöglicht es, Erdgas ganz oder teilweise durch das Pyrolysegas zu ersetzen.

Die bekannten Anlagen weisen zahlreiche Nachteile auf: man kann mit ihnen nur Qualitätsbrennstoff effektiv verbrennen, bis zu einem Wassergehalt von 18 Masse-%; bei der Vergasung entsteht flüssiger Abfall, der Kohlenwasserstoffe, insbesondere Phenol, beinhaltet, der in der Folge entsprechend entsorgt werden muss, in der Regel in Kläranlagen. Es handelt sich also nicht um eine abfalllose Technologie.

Die Wärmeleistung kann nur in kleinem Umfang verändert werden, und zwar nur um etwa 25% der Nennwärmeleistung. Die Sauberkeit des Pyrolysegases ist von der Anlagebelastung (Wärmeleistung) und vom Wassergehalt im Brennstoff abhängig. Daraus ergibt sich, dass das in den bekannten Generatoren erzeugte Pyrolysegas nicht für die großflächige Versorgung von Haushalten mit Strom, Heizung und Warmwasser verwendet werden kann.

Eine Anlage der eingangs genannten Art ist aus der CZ 293431 bekannt. Mit dieser Anlage ist eine effizientere Vergasung von organischem Abfall möglich, was die effektive Verwertung von Wald-, Holz- und anderem brennbarem Agrarabfall ermöglicht. Es werden geringere Emissionen erreicht, sodass die Umwelt weniger belastet wird. Das erzeugte Pyrolysegas hat eine gleichbleibend hohe Qualität, vor allem was die Einhaltung des Heizwerts und die Sauberkeit des Gases betrifft.

Mit dieser Anlage ist es möglich, Wald- und Holzabfall mit einer Feuchtigkeit bis zu 20 Masse-% zu verwerten, ohne dabei die vorgegebenen niedrigen Ausgangsemissionen zu überschreiten oder die Qualität des Pyrolysegases zu verringern. Mit dem Pyrolysegas dieser Anlage kann man daher vorteilhafterweise Verbrennungsmotoren (Ottomotoren) speisen und mit diesen einen Generator antreiben.

Die Erfahrungen beim Betrieb mehrerer Prototypen zeigten, dass diese Vorgaben tatsächlich erfüllt werden können. Es zeigten sich aber auch die folgenden Mängel:

Es ist in der Praxis schwierig, die notwendige Holzmasse mit der benötigten Struktur für einen Ganzjahresbetrieb zu vernünftigen Preisen aufzutreiben.

Es wäre günstig, auch grünes Hackgut, Stroh und auch Körnerfrüchte verwerten zu können. Derartiger Brennstoff steht in viel größerer Menge zur Verfügung. Der Brennstoff enthält dann viel kleines Korn, aber auch Stücke von der Größe groben Hackguts, vor allem aber hat er stark schwankenden Wassergehalt.

Solcher Brennstoff mit unterschiedlicher Korngröße, vor allem organischer Herkunft, und verschiedener Feuchtigkeit verursacht in der bekannten Anlage jedoch einen erhöhten Kohlenstoffdurchfall in die Asche und dadurch wesentlich mehr festen Abfall. (Holz in größeren Stücken ergibt nur sehr wenig Asche, ca. 1/2 %, aber gehäckseltes Holz kann bis zu 5% festen Abfall erzeugen, der dann im Zyklon abgeschieden wird.) Außerdem bewirkt die ungleiche Feuchtigkeit des Brennstoffs eine Möglichkeit zur Bildung einer größeren Teermenge, die nicht auf verbrennbare Kohlenwasserstoffe abgebaut werden kann und starke Motorverschmutzung verursacht. Der erreichte Wirkungsgrad der Übertragung von Wärmeenergie in elektrische Energie beträgt bei diesen Anlagen ca. 27%.

### Darstellung der Erfindung

### Technische Aufgabe

Es ist Aufgabe der vorliegenden Erfindung, eine Anlage der eingangs genannten Art so zu verbessern, dass auch Brennstoffe geringerer Qualität, insbesondere mit höherer Feuchtigkeit, verwertet werden können, ohne die Qualität des Pyrolysegases oder den Wirkungsgrad zu verschlechtern. Sogar Stroh, Autoreifen oder Klärschlamm sollen verwertet werden können. Weiters soll der Wirkungsgrad höher sein, anzustreben wären 33%.

### Technische Lösung

Diese Aufgaben werden durch eine Anlage der eingangs genannten Art erfindungsgemäß dadurch gelöst, dass die Asche im Gasgenerator und die im Zyklon abgeschiedenen Feststoffe einem Fließbettvergaser zugeführt werden, dessen Abgase in den Gasgenerator zurückgeführt werden.

Erfindungsgemäß wird also der erhöhte Kohlenstoffanteil in der Asche bei Verbrennung stark zerkleinerten Brennstoffs mit unterschiedlicher Feuchtigkeit, aber auch bei Verbrennung von Klärschlamm oder Autoreifen, effektiv zur Wärmeproduktion beim Vergasungsprozess verwendet, indem der Fließbettvergaser mit nachfolgender Erwärmung der Luft parallel zum Gasgenerator angeschlossen wird, wobei die erwärmte Luft zurück in den Gasgenerator geführt wird. Auf diese Weise erübrigt sich auch die Problematik der Entsorgung größerer Mengen an Asche, die bei der bekannten Anlage im Falle der Verbrennung von Klärschlamm oder Autoreifen als Sondermüll entsorgt werden müsste.

Das Wesentliche der Erfindung besteht darin, dass ein Fließbettvergaser vorgesehen ist, welcher vor allem Kohlenstoff aus Aschen von Biomasse aus Reinigungsschlamm, Strohsplitt, Körnerfrucht und Papiermasse vergast, wobei das Gas bzw. die erwärmte Luft zurück in den Gasgenerator geführt wird, wo es bzw. sie dann am Krackverfahren teilnimmt.

Vorzugsweise sind über einem Dosierförderer für den Brennstoff Sensoren eingebaut, z.B. zum Messen von Feuchtigkeit, Struktur, Körnigkeit und Zusammensetzung des Brennstoffes. Die Informationen werden in den Steuercomputer übertragen. Die Anlage sollte mit geringerer Leistung gefahren werden, wenn der Brennstoff besonders feucht oder besonders fein ist. Durch die Sensoren kann dies rechtzeitig erkannt werden (Vorwärtsregelung). Außerdem können Fremdkörper (z.B. Metalle oder Steine) aussortiert werden.

Weiters ist es zweckmäßig, einen Analysator, z.B. ein Flammenspektrometer, für das entwickelte Pyrolysegas vorzusehen. Auf diese Weise lässt sich z.B. eine Verunreinigung durch Phenole erkennen und durch entsprechende Regelung minimieren. (Rückkopplung) Es lässt sich auch erkennen, wenn die Regelung aufgrund der Sensoren für den Brennstoff nicht zufrieden stellend arbeitet.

Die Gaszusammensetzung kann durch Spektralzerlegung der Flamme eines Kontrollbrenners erfolgen, der aus der Rohrleitung vor oder hinter dem Zyklon mit einer Pumpe Gas absaugt und verbrennt, während eine Kamera die Flamme aufnimmt.

Die Regelung (Vorwärtsregelung und Rückkopplung) funktioniert so, dass bei schlechtem Brennstoff (z.B. hohe Feuchtigkeit) oder zu viel Teer im Pyrolysegas die Leistung des Motors reduziert wird oder mehr Brennstoff zugegeben wird, sodass die Temperatur im Reaktor steigt, wodurch die Qualität des Pyrolysegases gehoben wird. Wenn mehr Brennstoff zugeführt wird, steigt zwar der Ascheanfall, aber dies macht bei der erfindungsgemäßen Anlage nichts aus, weil die Asche im Fließbettvergaser verwertet wird. Es ist also möglich, auch bei schwankender Brennstoffqualität konstante Mengen an Pyrolysegas zu erzeugen.

Nach dem Zyklon wird das Gas in einem Zentrifugalfilter von feinen festen Unsauberkeiten und von Kondensat befreit. Durch einen nachgeschalteten Gaswäscher wird das Gas vor allem von Schwefel und Chlor befreit.

Vorzugsweise wird das Pyrolysegas in einem Absorptionsgaskühler gekühlt. Dadurch wird der Wirkungsgrad der Anlage erhöht, denn die dabei anfallende Wärme kann z.B. als Fernwärme genutzt werden.

Nach einer Ausgestaltung der Erfindung ist vorgesehen, das gereinigte und gekühlte Pyrolysegas in einem Mischer mit Luft zu mischen und über einen Kompressor eines Abgasturboladersystems in einen Dieselmotor zu pressen, der durch Einspritzung von flüssigem Brennstoff gezündet wird.

Die Anlage gemäß der Erfindung ermöglicht somit nicht nur, Turbolader-Ottomotoren zu verwenden, sondern auch Dieselmotoren sind verwendbar, wobei die Zündung durch Einspritzung von flüssigem Brennstoff, vorzugsweise von Biobrennstoff, bewirkt wird.

### Kurze Beschreibung der Zeichnungen

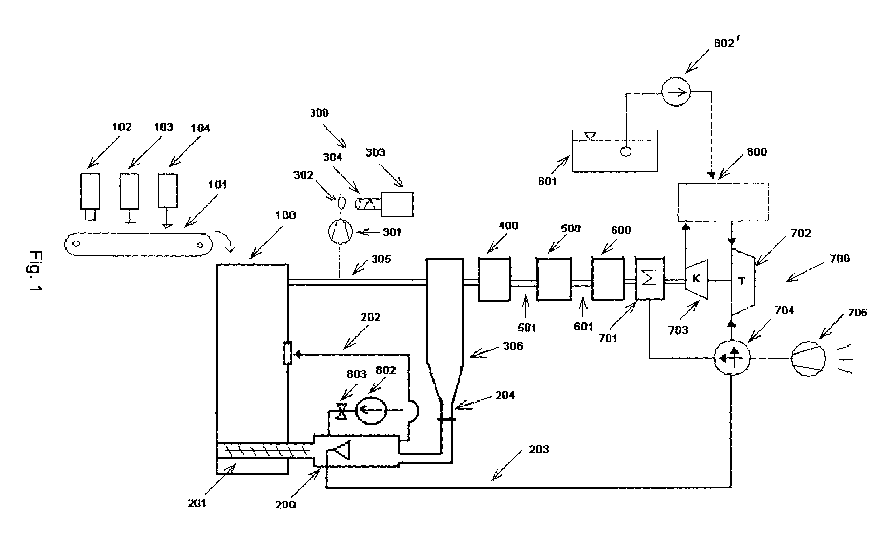

Anhand der beiliegenden Zeichnung wird die Erfindung näher erläutert. Die einzige Figur zeigt eine Schemazeichnung einer erfindungsgemäßen Anlage.

### Bester Weg zur Ausführung der Erfindung

Zentraler Teil der erfindungsgemäßen Anlage ist der Gasgenerator 100, der wie in CZ 293431 beschrieben aufgebaut sein kann. Er wird von einem Dosierförderer 101 mit Brennstoff versorgt. Über dem Dosierförderer 101 ist ein Sensor 102 zur Erfassung der Brennstoffstruktur (stückig, grobkörnig, feinkörnig) vorgesehen, weiters ein Sensor 103 zur Erfassung der Brennstofffeuchtigkeit und ein Sensor 104 zur Messung der Induktivität (um Metallteile zu erkennen).

An den Gasgenerator 100 ist über eine Leitung 305 ein Zyklon 306 angeschlossen, wo feste Stoffe (Flugasche) abgetrennt werden. Diese festen Stoffe werden über eine Schurre 204 einem Fließbettvergaser 200 zugeführt. Dem Fließbettvergaser 200 wird weiters Asche aus dem Gasgenerator 100 über einen Förderer 201 zugeführt. Dieser Förderer 201 kann als Schnecke ausgebildet sein, wodurch sich mehrere Vorteile ergeben: die Schnecke fördert dosiert, sie dichtet ab und sie zerkleinert die Asche. Die im Fließbettvergaser 200 entstehenden Gase werden über eine Rohrleitung 202 dem Gasgenerator 100 zugeführt. Da die Asche normalerweise nicht viel Kohlenstoff enthält, wird über eine Einspritzpumpe 802 und ein Ventil 803 zusätzlich flüssiger Brennstoff in den Fließbettvergaser 200 eingespritzt. Dem Fließbettvergaser 200 wird über eine Luftzuführung 203 Luft zugeführt, das entstehende Gas und die erwärmte Luft strömen dann über die Rohrleitung 202 in den Gasgenerator 100.

Im Bereich der Leitung 305 ist ein Analysator 300 für die Rückkopplung vorgesehen. Sie besteht aus einer Pumpe 301, die Gas aus der Leitung 305 absaugt und zu einem Kontrollbrenner 302 pumpt. Das Licht der Flamme wird durch eine Optik 304 mit Prisma zerlegt und von einer Industrie-Farbkamera 303 erfasst.

Nach dem Zyklon gelangt das Pyrolysegas zu einem Zentrifugalfilter 400 (z.B. vom Typ der Dekantierzentrifuge, dieser ist vor allem bei Verbrennung von Stroh wichtig), von dort über eine Leitung 501 zu einem Gaswäscher 500 (entfernt Cl, S und NOx, besonders wichtig bei der Verbrennung von Altreifen oder Klärschlamm), weiter über eine Leitung 601 zu einem Absorptionsgaskühler 600 (kühlt auf etwa 25°C).

Von dort gelangt das gereinigte und gekühlte Pyrolysegas zu einem insgesamt mit 700 bezeichneten Turbokompressorsystem. Zunächst wird es in einem Mischer 701 mit Luft vermischt. Dann wird es vom Kompressor 703 des Turboladers in einen Dieselmotor 800 gepumpt. Es ist dabei wichtig, dass im Mischer 701 so viel Luft zugemischt wird, dass das Gas/Luft-Gemisch durch die Kompression im Dieselmotor 800 allein noch nicht zündet. Erst wenn durch eine Einspritzpumpe 802' flüssiger Brennstoff aus einem Behälter 801 angesaugt und eingespritzt wird, wird die Zündung des Gas/Luft-Gemischs (im richtigen Zeitpunkt) ausgelöst. Die Abgase des Dieselmotors 800 treiben dann die Turbine 702 des Turboladers an, der seinerseits den Kompressor 703 antreibt.

Die notwendige Verbrennungsluft wird durch ein Luftgebläse 705 angesaugt und über die Luftverteilung 704 dem Mischer 701 zugeführt. Beim Start der Anlage wird die Luft von der Luftverteilung 704 auch der Turbine 702 des Turboladers zugeführt, um den Turbolader zu starten.

Die erfindungsgemäße Anlage funktioniert wie folgt:

Nachdem Brennstoff auf dem Dosierförderer 101 angeschüttet wurde, werden dessen Antriebsmotoren eingeschaltet. Weiters werden auch das Luftgebläse 705 und der Förderer 201 zum Austrag der Asche eingeschaltet. Die vom Luftgebläse 705 geförderte Luft versetzt die Turbine 702 in Drehung, auf deren Welle sich der Kompressor 703 befindet, der das Gas absaugt, wodurch am Ausgang des Gasgenerators 100 der notwendige Unterdruck entsteht, sodass Luft aus der Umgebung in die Glutzone des Gasgenerators angesaugt wird, wo der Brennstoff entzündet wird. In weiterer Folge wird im Fließbettvergaser 200 Gas und erhitzte Luft gebildet, die durch die Rohrleitung 202 zurück in den Gasgenerator 100 geführt werden. Das erzeugte Gas geht dann durch den Zyklon 306, wo es vom groben Flugstaub befreit wird, der sich im Unterteil ablagert und durch die Schurre 204 in den Fließbettvergaser 200 fällt. Der Brennstoff auf dem Dosierförderer 101 wird durch die Sensoren 102, 103, 104 beobachtet. Sensor 102 ist eine Kamera, die Brennstoffstruktur, Größe, Menge, Art und Körnigkeit erfasst. Sensor 103 ist ein Feuchtigkeitsfühler und misst durch Kontaktmeßmethode die Brennstofffeuchtigkeit. Sensor 104 ist im Grunde ein Induktivitätsfühler und überwacht, dass in den Gasgenerator keine Metallgegenstände und sonstige unverbrennbare Stoffe kommen. An die Leitung 305 ist die Pumpe 301 angeschlossen, die das Gas ansaugt und in den Kontrollbrenner 302 drückt, dessen Flamme die Kamera 303 über eine Optik 304 mit Prisma beobachtet, welche das Licht in die Spektrallinien zerlegt. Daraus wird dann die Temperatur des Gases und dessen Zusammensetzung bestimmt. Der Kameraausgang wird dem Steuercomputer zugeführt, wodurch die Rückkopplung des Systems realisiert wird. Das Gas geht nach dem Zyklon 306 durch den Zentrifugalfilter 400, wo es von weiteren festen Unsauberkeiten vor dem Eingang in den durch Leitung 501 angeschlossenen Gaswäscher 500 befreit wird. Aus dem Absorptionsfilter wird das Gas durch die Leitung 601 in den Absorptionsgaskühler 600 geführt, wonach es dem Mischer 701 des Turbokompressorsystems 700 zugeführt wird. Das ausgewaschene Gas - befreit von allen unerwünschten Unsauberkeiten - wird dann mit dem Kompressor 703 in den Motor 800 gedrückt. Im Falle der Verwendung eines nicht adaptierten Dieselmotors wird die Zündung durch Einspritzen von flüssigem Brennstoff (z.B. Methylester, Bioethanol oder Benzol) mittels der Einspritzpumpe 802' gezündet.

Mit der erfindungsgemäßen Anlage muss natürlich nicht unbedingt Strom erzeugt werden. Man kann das entstehende Pyrolysegas auch in einer Therme verbrennen und damit z.B. Warmwasser für eine Zentralheizung erwärmen.

## Patentansprüche

1. Anlage zur Erzeugung von Energie, insbesondere von elektrischer Energie und Wärmeenergie, aus brennbarem Abfall, insbesondere organischer Herkunft, wobei die Anlage einen Gasgenerator (100) mit automatischer Entaschung und einen Zyklon (306) beinhaltet, wobei vorzugsweise ein Motor (800) vorgesehen ist, der mit dem im Gasgenerator (100) erzeugten Gas betrieben wird und einen Generator zur Stromerzeugung antreibt, **dadurch gekennzeichnet, dass** die Asche im Gasgenerator (100) und die im Zyklon (306) abgeschiedenen Feststoffe einem Fließbettvergaser (200) zugeführt werden, dessen Abgase in den Gasgenerator (100) zurückgeführt werden.

2. Anlage nach Anspruch 1, **dadurch gekennzeichnet, dass** über einem Dosierförderer (101) für den Brennstoff Sensoren (102, 103, 104) eingebaut sind, z.B. zum Messen von Feuchtigkeit, Struktur, Körnigkeit und Zusammensetzung des Brennstoffes.

3. Anlage nach Anspruch 1 oder 2, **dadurch gekennzeichnet, dass** ein Analysator (300), z.B. ein Flammenspektrometer, für das das entwickelte Pyrolysegas vorgesehen ist.

4. Anlage nach einem der Ansprüche 1 bis 3, **dadurch gekennzeichnet, dass** das Pyrolysegas in einem Absorptionsgaskühler (600) gekühlt wird.

5. Anlage nach einem der Ansprüche 1 bis 4, **dadurch gekennzeichnet, dass** das gereinigte und gekühlte Pyrolysegas in einem Mischer (701) mit Luft gemischt und von einem Kompressor (703) eines Abgasturboladersystems (700) in einen Dieselmotor (800) gepresst wird, der durch Einspritzung von flüssigem Brennstoff gezündet wird.
